# EUROPÄISCHE PATENTANMELDUNG

(11) **EP 1 818 195 A1**
(43) Veröffentlichungstag der Anmeldung: **15.08.2007**
(21) Anmeldenummer: 07002803.0
(22) Anmeldetag: 09.02.2007
(51) Int. Cl.: B60G 21/055, B60G 7/00, F16C 11/06, F16F 1/393

(54) **Koppelstange für eine Stabilisatorenanordnung**

(30) Priorität: 14.02.2006 DE 102006006929
(71) Anmelder: Muhr und Bender KG, 57439 Attendorn (DE)
(72) Erfinder: Scharioth, Rüdiger, 57439 Attendorn (DE)
(74) Vertreter: Neumann, Ernst Dieter

(57) **Zusammenfassung**

Koppelstange, insbesondere für eine Stabilisatoranordnung in einem Kraftfahrzeug, die jeweils an ihren Enden Gelenke 19, 20 aufweist, bei der zumindest eines der Gelenke 19, 20 der Koppelstange 17, 18 ein Elastomer-Metall-Gelenk ist, das aus einem innenliegenden Kugelelement 35, 45, einem ringförmigen Elastomerelement 40, 50 und einem außenliegenden Hülsenteil 37, 47 besteht, wobei das Elastomerelement 40, 50 mit dem Kugelelement 35, 45 und dem Hülsenteil 37, 47 jeweils fest verbunden ist.

## Beschreibung

Die Erfindung betrifft eine Koppelstange, insbesondere für eine Stabilisatoranordnung für ein Kraftfahrzeug. Eine derartige Stabilisatoranordnung umfaßt in der Regel einen Stabilisator mit einem Drehstabfederabschnitt und zwei symmetrisch ausgebildeten Hebelarmen an dessen Enden, sowie Koppelstangen, die an den freien Enden der Hebelarme angeordnet sind und jeweils ein erstes Gelenk zur Anlenkung am jeweiligen Hebelarm und ein zweites Gelenk zur Anlenkung an einem beweglichen Teil einer der Radaufhängungen einer Achse des Kraftfahrzeugs haben. Stabilisatoranordnungen an Kraftfahrzeugen dienen im wesentlichen zur Unterdrückung der Seitenneigung des Kraftfahrzeuges bei Kurvenfahrt, indem eine einseitige Einfederbewegung und eine Ausfederbewegung auf der Gegenseite durch die Wirkung des Stabilisators vermindert wird. Hierbei wird ein insbesondere in Gummi gelagerter querliegender Stabilisator mit den beiden Radaufhängungen so verbunden, daß jede Federbewegung einer der Radaufhängungen einer Achse mittels des Stabilisators und vermindert durch den Drehstabfederabschnitt auf die andere Radaufhängung der Achse übertragen wird. Der Stabilisator hat hierbei zwei symmetrisch abgebogene Enden, die unmittelbar mit beweglichen Teilen, insbesondere Lenkern oder Federbeinen der Radaufhängung verbunden sein können oder die über zwei Koppelstangen mit solch beweglichen Teilen der Radaufhängung, d.h. Lenkern oder Federbeinen verbunden werden. Koppelstangen dieser Art weisen zur Anbindung der Enden der Koppelstangen an den Hebelarmen des Stabilisators einerseits und einem Teil der Radaufhängung andererseits Kugelgelenke auf, bei denen ein Kugelkörper mit angesetztem Befestigungszapfen in einer Kugelschale aus Lagermetall oder Kunststoff winkel- und drehbeweglich gleitet. Die Kugelgelenke sind in Augen an den Enden der Koppelstangen eingesetzt. Kugelgelenke dieser Art sind in der Herstellung relativ aufwendig und teuer. Sie unterliegen darüberhinaus mechanischem Verschleiß.

Koppelstangen der genannten Art sind auch mit einfachen Elastomer-Metall-Lageretementen zur Ausführung gekommen, bei denen ein innenliegender Befestigungszapfen in einer ringzylindrischen Elastomerhülse gehalten ist, die ihrerseits vn einem metallischen Hülsenkörper umgeben werden. Befestigungszapfen und Hülsenkörper sind stoffschlüssig mit der Elastomerhülse verbunden. Die Lagerelemente sind in Augen an den Enden der Koppelstange eingesetzt. Diese Lagerelemente können nur geringe Winkelbewegungen ausüben, so daß die Anwendung solcher Koppelstangen begrenzt ist.

Hiervon ausgehend liegt der Erfindung die Aufgabe zugrunde, Koppelstangen für eine Stabilisatoranordnung der eingangs genannten Art für große Arbeitswinkel mit verbesserten, günstig herzustellenden Gelenken bereitzustellen.

Die Lösung besteht in einer Koppelstange für eine Stabilisatoranordnung, die dadurch gekennzeichnet, daß zumindest eines der Gelenke der Koppelstange ein Elastomer-Metall-Gelenk ist, das aus einem innenliegenden Kugelelement, einem ringförmigen Elastomerelement und einem außenliegenden Hülsenteil besteht, wobei das Gummielement mit dem Kugelelement und dem Hülsenteil jeweils fest verbunden ist.

Hiermit werden die teuren gleitenden Kugelgelenke, die bisher verwendet wurden, durch kostengünstige und praktisch verschleißfreie Elastomer-Metall-Gelenke ersetzt, die für die geforderte Funktion der Koppelstange an den Hebelarmen der Stabilisatoranordnung ausreichende Winkelbewegungen darstellen können, wobei die auftretenden Rückstellkräfte die Funktion der Stabilisatoranordnung nicht beeinträchtigen.

Soweit hier der Ausdruck Kugelelement für das innenliegende Bauteil verwendet wird, an dem ein Stabilisator oder ein anderes Radaufhängungselement eines Kraftfahrzeugs angeschraubt werden kann, schließt dies auch kugelähnliche Körper wie Ellipsoide oder Zylinderkörper mit beidseitigen Endkonen ein.

Durch die Kugelform des innenliegenden Bauteils wird die Winkelbeweglichkeit des Elastomer-Metall-Gelenks wesentlich verbessert. Eine weitere Steigerung der Winkelbeweglichkeit kann dadurch erzielt werden, daß die Innenform des außenliegenden Hülsenteils an die Kugelform so angepaßt ist, daß das Elastomerelement im wesentlichen gleichmäßige Wandstärke aufweist, d.h. etwa als Kugelschalenabschnitt ausgenbildet ist.

Aus der DE 40 25 100 A1 ist ein Gummi-Metall-Lager bekannt, das einen innenliegenden kugelförmigen Formkörper aufweist; hierbei ist jedoch der den Formkörper umgebende Gummikörper sowohl in Längserstreckung als auch über dem Umfang mit veränderlicher Wandstärke ausgebildet. Anstelle eines ringförmig ausgebildeten Hülsenelements, wie bei der vorliegenden Erfindung, sind dort insbesondere zwei Halbschalen mit Umfangsabstand zueinander vorgesehen. Eine Verwendung in Koppelstangen ist nicht vorgesehen.

Die im wesentlichen gleichmäßige Wandstärke des Elastomerelements liegt hierbei sowohl über der Längserstreckung als auch über dem Umfang vor.

In einer bevorzugten Ausführungsform ist vorgesehen, daß an den Koppelstangen jeweils das mit der Radaufhängung zu verbindende Gelenk jeweils ein Elastomer-Metall-Gelenk der genannten Art ist. Mit einer solchen Ausführung ist eine Verwendung in Stabilisatoranordnungen für McPherson-Radaufhängungen besonders gut möglich.

Die Koppelstangen können hierbei aus einem Rundstab oder Profilstab mit angeschweißten Augen zur Aufnahme des oder der Elastomer-Metall-Gelenke bestehen oder als Gußteil oder Umformteil integral ausgeformte Augen zur Aufnahme des oder der Elastomer-Metall-Gelenke umfassen. Das Hülsenelement ist in der Regel in das entsprechende Auge eingepreßt.

Bevorzugte Ausführungen der Elastomer-Metall-Gelenke sind in den Unteransprüchen genannt, auf die hiermit Bezug genommen wird. Das Kugelelement besteht alternativ aus einem Kugelkörper mit anschließendem Gewindezapfen oder aus einem Kugelkörper mit einem Durchgangsloch, jeweils zur Herstellung einer Schraubverbindung. Das Elastomer-Metall-Gelenk besteht zusätzlich zum Kugelelement aus einem ringförmigen Elastomerelement und einem fest in einer Aufnahme der Koppelstange einzusetzenden Hülsenteil, wobei das Elastomerelement mit dem Kugeleiement und dem Hülsenteil vorzugsweise durch Vulkanisieren fest verbunden ist.

Das Kugelelement kann hierbei mit Korrosionsschutz z.B. auf Zink-Nickel-Basis versehen werden, mit einem Haftvermittlungssystem beschichtet und ebenso wie die Außenhülse in bestimmungsgemäßer Zuordnung in eine Form eingelegt werden, in die dann fließfähiges Elastomer eingebracht wird. Bei einer Temperatur in der Größenordnung von ca. 180°C wird das Elastomer innerhalb weniger Minuten ausvulkanisiert. Anschließend wird die Hülse in einer geeigneten Vorrichtung auf ihr Endmaß kalibriert, zum einen weil innerhalb des Elastomers beim Vulkanisieren ein Schwund erfolgt, zum anderen um dem Elastomer eine Druckvorspannung aufzuzeigen. Die Hülse kann jeweils aus einem Rohrabschnitt durch Umformen hergestellt werden, sie kann jedoch auch aus zwei halbringförmigen Halbschalen bestehen oder aus einem ursprünglich flachen und gebogenen Blechstreifen, wobei die Halbschalen bzw, der Blechstreifen an den Stößen in geeigneter Weise geschlossen werden können. Für die Herstellung des Kugelelements besteht die Möglichkeit des Anschweißens eines Gewindezapfens an eine fertige Vollkugel (z.B. eine Lagerkugel); das Kugelelement kann jedoch auch als Hohlelement geschmiedet und dann mechanisch bearbeitet werden. Schließlich ist die Herstellung einer Hohlkugel im Kalkfließprossen möglich, wobei ein Gewindezapfen anschließend eingepreßt werden kann. Das Kugelelement muß nicht notwendigerweise aus Metall bestehen, sondern kann auch als den Gewindezapfen einschließender Formkörper aus Kunststoff oder Gummi großer Härte hergestellt sein. An das Kugelelement können zylindrische Ansätze von kleinerem Durchmesser in Richtung des Gewindezapfens bzw. des Durchgangslochs angeformt sein, die als axiale Montageanschläge für das Gummi-Elastomer-Lager dienen und gegebenenfalls auch einen Anschlag für das Hülsenelement zur Begrenzung der Winkelbewegung bilden.

Eine erfindungsgemäße Stabilisatoranordnung, eine erfindungsgemäßer Koppelstange und erfindungsgemäße Elastomer-Metall-Gelenke sind in den Zeichnungen dargestellt und werden nachstehend beschrieben
- Figur 1: zeigt eine erfindungsgemäße Stabilisatoranordnung in 3D-Darstellung;
- Figur 2: zeigt eine erfindungsgemäße Koppelstange für eine Anordnung nach Figur 1;
- Figur 3: zeigt ein erfindungsgemäßes Elastomer-Metall-Gelenk mit Gewindezapfen in der Ausführung nach Figur 2 als Einzelheit
a) in Stirnansicht
b) im Längsschnitt
- Figur 4: zeigt ein erfindungsgemäßes Elastomer-Metall-Gelenk mit Gewindezapfen in einer zweiten Ausführung;
- Figur 5: zeigt ein erfindungsgemäßes Elastomer-Metall-Gelenk mit Gewindezapfen in einer dritten Ausführung;
- Figur 6: zeigt ein erfindungsgemäßes Elastomer-Metall-Gelenk mit Gewindezapfen in einer vierten Ausführung;
- Figur 7: zeigt ein erfindungsgemäßes Elastomer-Metall-Gelenk mit einer Durch-gangsöffnung in der Ausführung nach Figur 2 als Einzelheit;
- Figur 8: zeigt ein erfindungsgemäßes Elastomer-Metall-Gelenk mit einer Durch-gangsöffnung in einer zweiten Ausführung;
- Figur 9: zeigt ein erfindungsgemäßes Eiastomer-Metall-Gelenk mit einer Durch-gangsöffnung in einer dritten Ausführung;
- Figur 10: zeigt ein erfindungsgemäßes Elastomer-Metall-Gelenk mit einer Durch-gangsöffnung in einer vierten Ausführung.

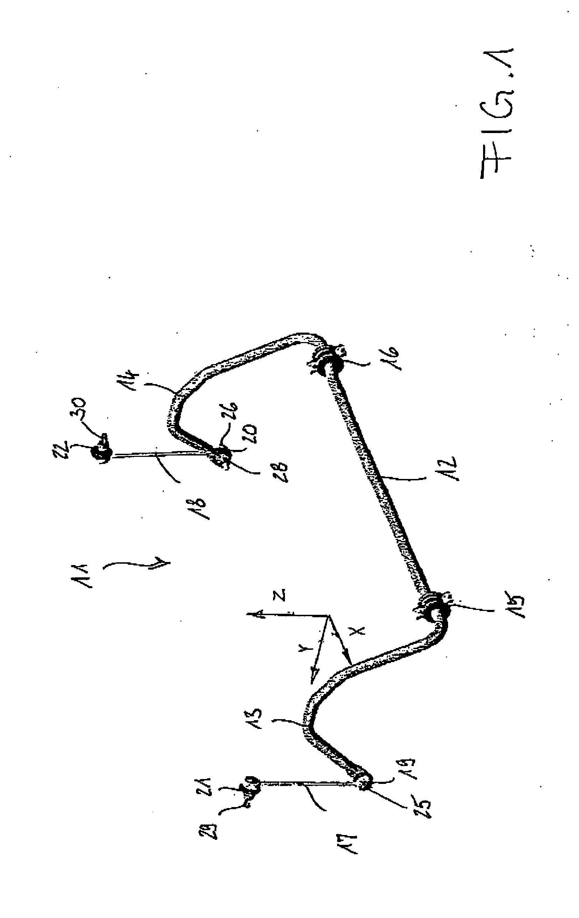

In Figur 1 ist eine erfindungsgemäße Stabilisatoranordnung 11 dargestellt, die für ein Kraftfahrzeug bestimmt ist, wobei die angezeigte X-Richtung die Längsrichtung des Kraftfahrzeuges ist und die angezeigte Y-Richtung die Querrichtung des Fahrzeugs ist. Die Z-Richtung kann beispielsweise die Hochachse des Fahrzeuges sein; dies ist jedoch nicht erforderlich, die Hochachse des Kraftfahrzeugs kann auch einen anderen Winkel zur X-Y-Ebene bilden.

Der Stabilisator 11 im engeren Sinne umfaßt einen geraden Drehstabfederabschnitt 12 sowie zwei davon etwa rechtwinklig abgebogene gekröpfte Hebelarme 13, 14. Der Drehstabfederabschnitt ist in zwei Gummi-Metall-Lagern 15, 16 gehalten, die im Kraftfahrzeug auf einer Querachse, beispielsweise im Motorraum oder am Unterboden festgelegt werden. Die beiden Hebelarme 13, 14 dienen zur Verbindung mit den beiden Radaufhängungen einer Achse des Kraftfahrzeuges; dies kann die Vorderachse oder die Hinterachse sein. Die Bewegungen der beiden Radaufhängungen werden auf die Hebelarme 13, 14 über zwei Koppelstangen 17, 18 übertragen, die jeweils über erste Gelenke 19, 20 mit den freien Enden der Hebelarme 13, 14 verbunden sind und mit zweiten Gelenken 21, 22 mit den beiden Radaufhängungen zu verbinden sind. Die ersten Gelenke 19, 20 der Koppelstangen 17, 18 sind mit durchgesteckten Schrauben 25, 26 und Muttern, von denen nur eine (28) zu erkennen ist, mit den freien Enden der Hebelarme 13, 14 verbunden. Die zweiten Gelenke 21, 22 können beispielsweise Gewindezapfen 29, 30 aufweisen, die mit den Kugelelementen der Elastomer-Metall-Gelenke, die später gezeigt werden, unmittelbar fest verbunden sind.

Die unterschiedliche Orientierung der Gewindezapfen 29, 30 in Richtung der X-Achse soll andeuten, daß die Winkelposition der Gewindezapfen frei wählbar ist und nicht notwendigerweise parallel zur Querrichtung Y sein muß. Sie wird jedoch in der Regel übereinstimmend sein. Die Konstruktion der Koppelstangen 17, 18 kann eine Drehbarkeit der ersten und zweiten Gelenke bezogen auf die Längsrichtung der Koppelstangen zueinander zulassen, vorzugsweise ist jedoch je nach Art der Radaufhängungen eine bestimmte Winkelstellung fest vorgegeben, wobei die Achsen der Gewindezapfen bzw. der Durchgangsöffnungen in den Gelenken 21, 22, 19, 20 senkrecht zur Achse Z der Koppelstangen 17, 18 liegen.

In Figur 2 ist eine der Koppelstangen, hier mit 17 bezeichnet, als Einzelheit mit Teilschnitten dargestellt. Es sind ein Rundstab 31 und zwei mit diesem verschweißte Augen 23, 33 gezeigt, die jeweils eine zylindrische Innenöffnung haben. Rundstab 31 und Augen 23, 33 sind in dem vorliegenden Ausführungsbeispiel miteinander verschweißt; sie können jedoch auch ein einheitliches Guß- oder Formteil darstellen. Der Rundstab 31 ist gebrochen dargestellt, die Achsen der Augen 23, 33 können je nach Einbauverhältnissen bzw. Geometrie der Radaufhängungen in einer zur Längsachse des Rundstabes 31 beliebig gedrehten Position liegen. Das in das erste Auge 33 eingepreßte Elastomer-Metall-Gelenk 21 umfaßt ein hohles Kugelelement 35 mit zylindrischem Ansatz 36, an der ein Gewindezapfen 29 angeschweißt ist. Das Gelenk 21 umfaßt weiterhin ein Hülsenteil 37, das im mittleren Bereich zylindrisch ist und zwei konische Endabschnitte 38, 39 hat. Durch die konischen Endabschnitte 38, 39 ist die Innenform des Hülsenteils 37 an die Form des Kugelelements 35 so angepaßt, daß ein zwischen diesen liegendes ringförmiges Elastomerelement 40, das mit beiden Teilen durch Anvulkanisation verbunden ist, im wesentlichen über der Länge und über dem Umfang gleiche Wandstärke hat. Das Elastomerelement 40 hat anschließende Manschetten 41, 42 von geringer Wandstärke, die das Kugelelement 35 und den Ansatz 36 vollkommen umschließen und damit eine verbesserte Anbindung und gleichzeitig einen Korrosionsschutz erzeugen. Die Hülse 37 sitzt im Preßsitz im Auge 33 ein.

Das in das zweite Auge 23 eingesetzte Elastomer-Metall-Gelenk 19 hat als Kugelelement 45 eine Hohlkugel mit zwei hülsenförmigen Ansätzen 44, 46, die eine Durchstecköffnung für eine Schraube bilden. Im übrigen hat auch dieses Gelenk ein im mittleren Bereich zylindrisches Hülsenelement 47 mit konischen Endabschnitten 48, 49, zwischen denen ein ringförmiges Elastomerelement 50 angeordnet ist. Dieses Elastomerelement 50 hat Manschettenansätze 51, 52, die das Kugelelement 45 mit den Ansätzen über der ganzen Länge überziehen. Auch hierbei ist das Elstomerelement 50 durch die Formgebung der Hülse 47 im Verbindungsbereich mit dem Kugelelement und der Hülse mit etwa gleichbleibender Wandstärke über der Länge und über dem Umfang ausgebildet. Hiermit ergibt sich bei Gelenkbewegungen eine homogene Belastung des Gummimaterials.

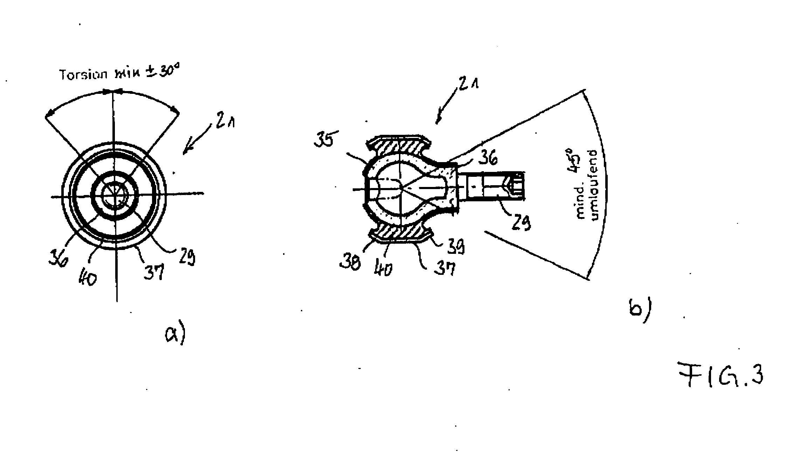

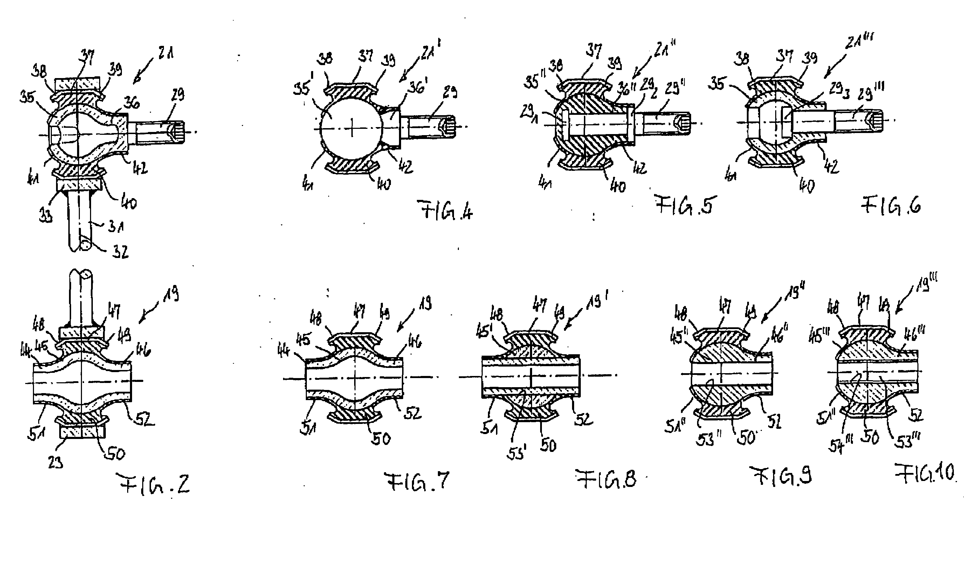

In Figur 3 ist das Elastomer-Metall-Gelenk 21 nach Figur 2 als Einzelheit dargestellt, wobei gleiche Teile mit gleichen Bezugszeichen versehen sind. Darüber hinaus ist in Figur 3a der Torsionswinkel des Kugelelements mit dem Gewindezapfen gegenüber der Hülse in Größe von minimal ± 30° eingezeichnet, während in Figur 3b der maximale Gelenkwinkel der Zapfenachse gegenüber dem Hülsenelement von umlaufend mindestens 45° gegenüber der Längsachse eingezeichnet ist.

In Figur 4 ist ein Elastomer-Metall-Gelenk 21' in einer gegenüber Figur 2 abgewandelten Ausführung dargestellt. Das Kugelelement 35' ist hierbei als Vollkugel ausgebildet, während der Ansatz 36' als angeschweißter oder angeklebter Vollzapfen ausgebildet ist. Der Gewindezapfen 29, das Hülsenelement 37 und das Elastomerelement 40 unterscheiden sich in der Form nicht von der Ausführung nach Figur 3.

In Figur 5 ist ein Elastomer-Metall-Gelenk 21" in einer anderen gegenüber Figur 2 abgewandelten Ausführung dargestellt. Hierbei ist ein Gewindezapfen 29", der sich einstückig in das Innere des Kugelelements 35' erstreckt und zwei radiale Flansche 29₁, 29₂ trägt, mit einem Kunstoff- oder Gummikörper oder einem Körper aus Leichtmetall, der eine Kugelform mit einem Ansatz 36" bildet, umgossen. Das Kugelelement kann auch auf den Gewindezapfen aufgepreßt oder aufgeschraubt sein. Die Form des Hülsenelements 37 und die Form und Ausbildung des Elastomerelements 40 unterscheidet sich nicht von der in Figur 3 gezeigten.

In Figur 6 ist ein Elastomer-Metall-Gelenk 21"' in einer dritten Abwandlung gezeigt, wobei ein Kugelelement 35 und ein Ansatz 36 im wesentlichen der Ausführung nach Figur 2 entsprechen, ein Gewindezapfen 29"' mit Bolzenkopf 29₃ jedoch eingesetzt ist, wobei die Verbindung mit dem Kugelelement 35 lose gefügt, verpreßt oder geklebt sein kann.

In Figur 7 ist das Elastomer-Metall-Gelenk 19 nach Figur 2 als Einzelheit im Längsschnitt dargestellt, wobei gleiche Einzelheiten mit gleichen Bezugsziffern bezeichnet sind. Auf die Beschreibung der Figur 2 wird insoweit Bezug genommen.

In Figur 8 ist ein Elastomer-Metall-Gelenk 19' in einer abgewandelten Ausführung gegenüber Figur 2 gezeigt, wobei ein Kugelelement 45' mit Durchgangsbohrung 53' von einem eingeschobenen Rohrabschnitt 46' durchsetzt ist. Die Verbindung dieser beiden Teile kann durch Preßsitz geschehen oder das Kugelelement 45' kann aus abweichendem Material, d.h. Gummi, Kunststoff oder Leichtmetall bestehen und aufgeformt bzw. aufgespritzt sein. Die Ausführung der Hülse 47 und des Gummielements 50 unterscheidet sich nicht von der Ausführung nach Figur 2.

In Figur 9 ist ein Elastomer-Metall-Gelenk 19" mit einer Durchgangsöffnung 53" im Kugelelement 45" dargestellt, bei dem das Kugelelement 45" jedoch nur einen einseitigen Ansatz 46" und damit eine Form ähnlich wie bei dem Gelenk 19 in Figur 2 hat. Das Hülsenelement 47 entspricht vollständig der Ausführung nach Figur 2, während das Elastomerelement 50" eine abweichend geformte Manschette 51" neben der Manschette 52 hat.

In Figur 10 ist ein Elastomer-Metall-Gelenk 19''' gezeigt, das mit dem Gelenk nach Figur 7 vollständig übereinstimmt, wobei jedoch die Durchgangsöffnung 53"' ein Innengewinde 54''' hat. Dieses Gelenk kann anstelle einer Schrauben-Mutterverbindung somit mittels einer Kopfschraube an einem entsprechenden Anschlußteil befestigt werden.

Die ringförmige Umschließung des Kugelelements 35, 45 durch das Elastomerelement 30, 50 ist bevorzugt über dem Umfang geschlossen, sie kann jedoch in abgewandelter Ausführung auch in allen Ausführungsformen einzelne Unterbrechungen auf dem Umfang aufweisen.

### Bezugszeichenliste

- 11: Stabilisatoranordnung
- 12: Torsionsfeder
- 13: Hebelarm
- 14: Hebelarm
- 15: Elastomer-Metall-Gelenk
- 16: Elastomer-Metall-Gelenk
- 17: Lenkerarm
- 18: Lenkerarm
- 19: Elastomer-Metall-Gelenk
- 20: Elastomer-Metall-Gelenk
- 21: Elstomeri-Metall-Gelenk
- 22: Elastomer-Metall-Gelenk
- 23: Auge
- 24: Auge
- 25: Schraube
- 26: Schraube

- 28: Mutter
- 29: Gewindezapfen
- 30: Gewindezapfen
- 31: Rundstab
- 32: Längsachse
- 33: Auge
- 34: Auge
- 35: Kugel
- 36: Ansatz
- 37: Hülse
- 38: Konus
- 39: Konus
- 40: Elastomerelement
- 41: Manschette
- 42: Manschette

- 44: Ansatz
- 45: Kugel
- 46: Ansatz
- 47: Hülse
- 48: Konus
- 49: Konus
- 50: Elastomerelement
- 51: Manschette
- 52: Manschette

## Patentansprüche

1. Koppelstange, insbesondere für eine Stabilisatoranordnung in einem Kraftfahrzeug, die jeweils an ihren Enden Gelenke (19, 20) aufweist,
**dadurch gekennzeichnet,**
**daß** zumindest eines der Gelenke (19, 20) der Koppelstange (17, 18) ein Elastomer-Metall-Gelenk ist, das aus einem innenliegenden Kugelelement (35, 45), einem ringförmigen Elastomerelement (40, 50) und einem außenliegenden Hülsenteil (37, 47) besteht, wobei das Elastomerelement (40, 50) mit dem Kugelelement (35, 45) und dem Hülsenteil (37, 47) jeweils fest verbunden ist.

2. Koppelstange nach Anspruch 1,
**dadurch gekennzeichnet,**
**daß** sowohl das erste Gelenk (19, 20) als auch das zweite Gelenk (21, 22) jeweils ein Elastomer-Metall-Gelenk ist, das aus einem innenliegenden Kugelelement (35, 45), einem ringförmigen Elastomerelement (40, 50) und einem außenliegenden Hülsenteil (37, 47) besteht, wobei das Elastomerelement (40, 50) mit dem Kugelelement (35, 45) und dem Hülsenteil (37, 47) jeweils fest verbunden ist.

3. Koppelstange nach einem der Ansprüche 1 oder 2,
**dadurch gekennzeichnet,**
**daß** das Elastomerelement (40, 50) jeweils stoffschlüssig mit dem Kugelelement (35, 45) und dem Hülsenteil (37, 47) verbunden ist.

4. Koppelstange nach einem der Ansprüche 1 bis 3,
**dadurch gekennzeichnet,**
**daß** jeweils das Hülsenteil (37, 47) zumindest einen zylindrischen Abschnitt aufweist, der in eine Bohrung in einem Auge (23, 24) der Koppelstange eingepreßt ist.

5. Koppelstange nach einem der Ansprüche 1 bis 4,
**dadurch gekennzeichnet,**
**daß** jeweils an dem Kugelelement (35, 45) ein Gewindezapfen (29, 30) fest angeschlossen ist, insbesondere angeschweißt ist.

6. Koppelstange nach einem der Ansprüche 1 bis 4,
**dadurch gekennzeichnet,**
**daß** jeweils das Kugelelement (35, 45) mit einer Durchgangsöffnung versehen ist.

7. Koppelstange nach einem der Ansprüche 1 bis 4,
**dadurch gekennzeichnet,**
**daß** das Kugelelement (35) eine offene Hohlkugel mit einem Ansatz (36) zur Befestigung des Gewindezapfens ist.

8. Koppelstange nach Anspruch 7,
**dadurch gekennzeichnet,**
**daß** der Ansatz (36) aus der Hohlkugel ausgeformt ist.

9. Koppelstange nach einem der Ansprüche 1 bis 5,
**dadurch gekennzeichnet,**
**daß** das Kugelelement (35') eine Vollkugel ist.

10. Koppelstange nach Anspruch 9,
**dadurch gekennzeichnet,**
**daß** ein Ansatz (36') einstückig mit einem Gewindezapfen (29), ist, der mit dem Kugelelement (35') verbunden ist.

11. Koppelstange nach einem der Ansprüche 1 bis 4,
**dadurch gekennzeichnet,**
**daß** das Kugelelement (35") auf eine Verlängerung eines Gewindezapfens (29") aufgeformt ist.

12. Koppelstange nach einem der Ansprüche1 bis 4,
**dadurch gekennzeichnet,**
**daß** ein Gewindezapfen (29"') in das Kugelelement (35'''), insbesondere in eine Hohlkugel eingesteckt ist.

13. Koppelstange nach einem der Ansprüche 1 bis 4,
**dadurch gekennzeichnet,**
**daß** das Kugelelement (45) eine Hohlkugel mit einer Durchgangsöffnung und zwei angeformten Ansatzhülsen (44, 46) ist.

14. Koppelstange nach einem der Ansprüche 1 bis 4,
**dadurch gekennzeichnet,**
**daß** das Kugelelement (45') eine Durchgangsöffnung (53) aufweist, in die ein Rohrabschnitt (...) eingesteckt ist.

15. Koppelstange nach einem der Ansprüche 1 bis 4,
**dadurch gekennzeichnet,**
**daß** das Kugelelement (45") einen Ansatz und eine Durchgangsöffnung (53) aufweist.

16. Koppelstange nach einem der Ansprüche 14 oder 15,
**dadurch gekennzeichnet,**
**daß** die Durchgangsöffnung (53) ein Innengewinde (...) aufweist.

17. Koppelstange nach einem der Ansprüche 1 bis 16,
**dadurch gekennzeichnet,**
**daß** sie einen Stab (31) mit zwei angeschweißten Augen (23, 33) zur Aufnahme jeweils eines Gelenks umfaßt.

18. Koppelstange nach einem der Ansprüche 1 bis 16,
**dadurch gekennzeichnet,**
**daß** sie einen Stab (31) mit zwei integral angeformten Augen (23, 33) zur Aufnahme jeweils eines Gelenks umfaßt.
